Europäisches Patentamt

European Patent Office

Office européen des brevets

(19)

(11) Veröffentlichungsnummer: **0 077 010**
**B1**

(12) **EUROPÄISCHE PATENTSCHRIFT**

(45) Veröffentlichungstag der Patentschrift:
**12.03.86**

(51) Int. Cl.⁴: **H 04 N 5/92**

(21) Anmeldenummer: **82109220.2**

(22) Anmeldetag: **06.10.82**

(54) Schaltung zur Verstellung der Flanken eines Videosignals, insbesondere für einen Videorecorder.

(30) Priorität: **14.10.81 DE 3140761**
**25.02.82 DE 3206685**

(43) Veröffentlichungstag der Anmeldung:
**20.04.83 Patentblatt 83/16**

(45) Bekanntmachung des Hinweises auf die Patenterteilung:
**12.03.86 Patentblatt 86/11**

(84) Benannte Vertragsstaaten:
**AT BE CH DE FR GB IT LI LU NL SE**

(56) Entgegenhaltungen:
**EP - A - 0 015 499**
**DE - A - 1 512 688**
**DE - A - 2 700 874**
**DE - A - 2 730 131**
**DE - A - 2 737 796**
**GB - A - 2 000 666**

(73) Patentinhaber: **TELEFUNKEN Fernseh und Rundfunk GmbH, Göttinger Chaussee 76, D-3000 Hannover 91 (DE)**

(72) Erfinder: **Kluth, Hans-Jürgen, Gartenstrasse 4, D-3008 Garbsen 8 (DE)**

(74) Vertreter: **Einsel, Robert, Dipl.-Ing., TELEFUNKEN Fernseh und Rundfunk GmbH Göttinger Chaussee 76, D-3000 Hannover 91 (DE)**

## Beschreibung

Videosignale für eine einwandfreie Bildwiedergabe in einem Fernsehempfänger haben im allgemeinen eine Videobandbreite von etwa 5 MHz. In der Praxis kommt es vor, dass ein Vedeosignal eine verringerte Bandbreite von 2–3 MHz aufweist, z.B. bei der Abtastung schlechter Filme, bei einfachen Kameras, bei der Wiedergabe von Aufzeichnungsgeräten mit verringerter Bandbreite oder bei bandbegrenzten Übertragungsstrecken. Eine derartig verringerte Bandbreite bedeutet bei der Wiedergabe eine verringerte Bildschärfe, insbesondere bei senkrechten Kanten im Bild.

Es ist bekannt, bei einem derartigen Signal die Bildschärfe durch eine Aufbereitung des Videosignals zu verbessern. Bei den hierfür verwendeten Differenzierentzerrern wird dem Videosignal ein Korrektursignal hinzugefügt, das durch zweifache Differentiation aus dem Vedeosignal gewonnen ist. Dadurch werden Flanken im Videosignal, die wegen der Bandbegrenzung zu flach verlaufen, versteilert.

Bei einer derartigen Schaltung hat sich folgender Nachteil ergeben. Wenn die Amplitude des Korrektursignals für kleine Signalsprünge im Videosignal optimal bemessen ist, ergeben sich bei grösseren Signalsprüngen, z.B. einen Schwarz/Weiss-Sprung im korrigierten Videosignal extrem hohe Spannungsspitzen an den Sprüngen. Diese hohen Spannungsspitzen, die ausserdem noch unsymmetrisch zum eigentlichen Wert des Videosignals sein können, bewirken wieder eine subjektive Bildverschlechterung. Die Spannungsspitzen können ausserdem den Synchronboden der Zeilensynschronimpulse in Richtung Ultraschwarz überschreiten und in der Zeilenablenkschaltung zu Ablenkstörungen führen. Dieser Nachteil kann zwar dadurch vermieden werden, dass die Amplitude des Korrektursignals kleiner gewählt wird. Dann wird aber andererseits die Bildverbesserung bei kleinen Signalsprüngen im Videosignal wieder geringer oder kaum noch merkbar.

Der Erfindung liegt die Aufgabe zugrunde, eine Schaltung der beschriebenen Art zu schaffen, die bei kleinen Signalsprüngen im Videosignal eine optimale Bildverbesserung bewirkt, ohne dass bei grösseren Signalsprüngen störende Spannungsspitzen im Videosignal auftreten.

Diese Aufgabe wird durch die im Anspruch 1 beschriebene Erfindung gelöst. Vorteilhafte Weiterbildungen der Erfindung sind in den abhängigen Ansprüchen beschrieben.

Die Erfindung beruht auf folgender Überlegung. Für eine subjektive Bildverbesserung ist insbesondere eine Versteilerung der Flanken im Videosignal bei kleinen Signalsprüngen wichtig, zumal kleine Signalsprünge statistisch gesehen im Bild häufiger auftreten. Bei grösseren Signalsprüngen ist es nicht notwendig und auch nicht zweckmässig, ein entsprechend proportional grösseres Korrektursignal hinzufügen. Vielmehr ist es vorteilhaft, die Amplitude des Korrektursignals zu begrenzen. Die Wirkung der erfindungsgemässen Korrekturschaltung wird also in vorteilhafter Weise unter Berücksichtigung der eintretenden subjektiven Bildverbesserung an die Amplitude der Signalsprünge im Videosignal angepasst.

Es ist zwar bekannt (DE-A 1–2 700 874), in einem differenzierten Videosignal Impulsspitzen in ihrer Amplitude zu begrenzen, doch geschieht dies zu Lösung einer anderen Aufgabe, nämlich der Verhinderung der Übermodulation bei Preemphase-Deemphase-Schaltungen. Auch ist die Bemessung der bekannten Schaltung nicht für die Realisierung der vorliegenden Erfindung geeignet. Bei der bekannten Schaltung wird nämlich durch die Mittel zur Amplitudenbegrenzung der besonders grossen Impulsspitzen zugleich der Frequenzgang des Videosignals verändert.

In einem Videorecorder erfolgt die erfindungsgemässe Korrektur des Videosignals vorzugsweise im Aufnahmeweg. Wenn dann für die Aufnahme ein weniger gutes Videosignal, z.B. durch eine schlechte Sendung, ankommt, so wird das Videosignal bereits vor der Aufnahme verbessert. Dieses ist wichtig, da nach der Aufnahme eines schlechten Videosignals und der hinzukommenden weiteren Verschlechterung durch den Videorecorder das Signal letztlich nicht wieder in dem Masse verbessert werden kann. Die Korrektur des Videosignals bei der Aufnahme hat den Vorteil, dass dann ein hinsichtlich der Bildschärfe verbessertes Videosignal aufgezeichnet wird. Der Vorteil der besseren Bildschärfe ergibt sich somit auch dann, wenn dieses Band auf einem beliebigen anderen Videorecorder wieder abgespielt wird. Bei einem Videorecorder wird im allgemeinen das Videosignal auch bei der Aufnahme durch die Aufnahmeschaltung etwas verschlechtert. Diese Verschlechterung des Videosignals kann durch die erfindungsgemässe Schaltung bei der Aufnahme ebenfalls ausgeglichen werden, so dass die Qualität des auf dem Band aufgezeichneten Videosignals nicht von der des dem Recorder zugeführten Videosignals abweicht.

Durch die doppelte Differentiation enthält das Korrektursignal beträchtliche Rauschanteile bei hohen Frequenzen, die an sich die Bildwiedergabe wieder verschlechtern können. Deshalb ist gemäss einer vorteilhaften Weiterbildung der Erfindung in den Weg des korrigierten Videosignals ein Tiefpass eingeschaltet, dessen Durchlassbereich etwa gleich der Bandbreite des ursprünglichen Videosignals ist. Die Grenzfrequenz des Tiefpasses kann je nach Bandbreite des ankommenden Videosignals z.B. bei 3 MHz, 4 MHz oder 5 MHz liegen. Durch diesen Tiefpass, der alle Rauschanteile oberhalb der oberen Bandgrenze des Videosignals beseitigt, wird die Bildwiedergabe beträchtlich verbessert.

Ein Ausführungsbeispiel der Erfindung wird anhand der Zeichnung erläutert. Darin zeigen

Fig. 1 ein Blockschaltbild der erfindungsgemässen Schaltung,

Fig. 2 ein nicht korrigiertes Videosignal,

Fig. 3 ein in bekannter Weise korrigiertes Videosignal mit zu hohen Spannungsspitzen.

Fig. 4 ein durch die erfindungsgemässe Schaltung korrigiertes Videosignal,

Fig. 5, 6 Weiterbildungen der Erfindung zur Realisierung der Amplitudenbegrenzung,

Fig. 7, 8 ein Ausführungsbeispiel für eine andere Weiterbildung der Erfindung,

Fig. 9, 10 ein Ausführungsbeispiel für eine weitere Weiterbildung der Erfindung und

Fig. 11 eine praktisch erprobte, erfindungsgemässe Schaltung.

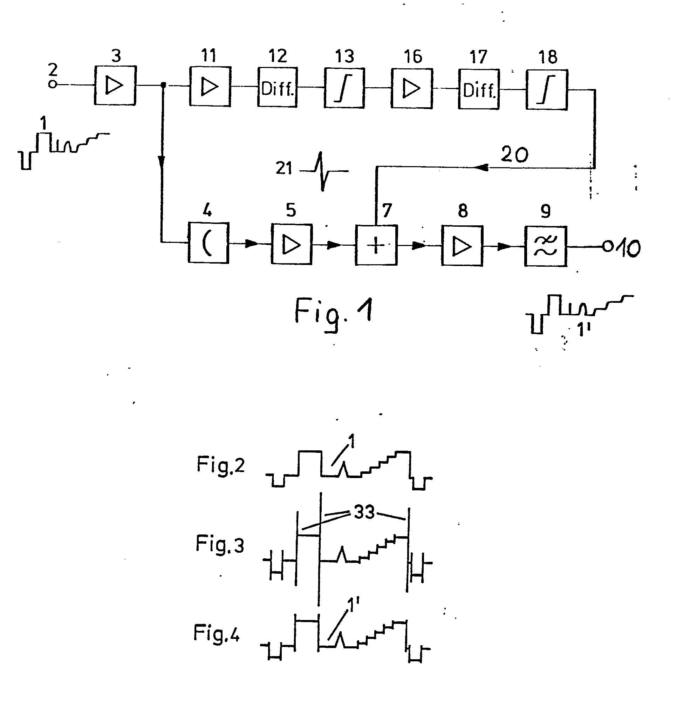

In Fig. 1 gelangt das nicht korrigierte Videosignal 1 von der Klemme 2 über den Verstärker 3, das Laufzeitglied 4 und den Verstärker 5 an die Addierstufe 7. Von dort gelangt das Videosignal über den Verstärker 8 und den Tiefpass 9 mit einer Grenzfrequenz von 3,0 MHz an die Ausgangsklemme 10, an der das korrigierte Videosignal 1' zur Verfügung steht.

Vom Ausgang des Verstärkers 3 gelangt das Videosignal 1 ausserdem über den Verstärker 11 an die Differenzierstufe 12. Am Ausgang der Differenzierstufe 12 liegt der Amplitudenbegrenzer 13, der die Signalamplituden des differenzierten Signales in positiver und negativer Richtung begrenzt. Das derart differenzierte und in der Amplitude begrenzte Signal gelangt über den Verstärker 16 auf die zweite Differenzierstufe 17. Dieser ist ebenfalls ein Begrenzer 18 nachgeschaltet, der so wirkt wie der Begrenzer 13. Dadurch entsteht an der Leitung 20 das durch zweifache Differentiation und anschliessende Amplitudenbegrenzung gewonnene Korrektursignal 21. Dieses wird in der Addierstufe 7 dem Videosignal 1 im Sinne einer Korrektur, d.h. Flankenversteilerung, hinzugefügt. Die Amplitude des Korrektursignals 21 und die Begrenzerwerte der Begrenzer 13, 18 sind so gewählt, das bei kleinen Signalsprüngen im Videosignal 1 die Amplitudenbegrenzer 13, 18 praktisch unwirksam sind, das Korrektursignal 21 nicht begrenzt wird und eine erwünschte Versteilerung der Flanken im Videosignal auftritt, dass aber bei grösseren Signalsprüngen im Videosignal 1 im korrigierten Videosignal 1' keine zu grossen Spannungsspitzen auftreten, die die Bildwiedergabe oder die Synchronisierung stören können.

Fig. 2 zeigt das nicht korrigierte Videosignal 1 an der Klemme 2. Das Videosignal enthält einen relativ breiten Schwarz/Weiss-Sprung, einen sogenannten 20T-Impuls und fünf kleine Signalsprünge. Durch die Schaltung werden insbesondere diese kleinen Signalsprünge versteilert.

Figur 3 zeigt ein korrigiertes Videosignal, wie es in bekannter Weise mit einer Schaltung nach Figur 1 ohne die Begrenzer an der Klemme 10 stehen würde. Die fünf kleinen Signalsprünge erfahren eine erwünschte, eine subjektiv bessere Bildwiedergabe bewirkende Versteilerung. Bei den grösseren Signalsprüngen treten jedoch extrem hohe Spannungsspitzen 33 auf, die den dreifachen Wert der an sich im Videosignal enthaltenen Signalsprünge erreichen. Diese extrem hohen Signalsprünge führen zu einer subjektiven Bildverschlechterung. Da sie den Synchronboden der Zeilensynchronimpulse überschreiten, können sie bei der Bildwiedergabe auch die amplitudenabhängig arbeitende Zeilenablenkschaltung stören.

Figur 4 zeigt das korrigierte Videosignal 1' an der Klemme 10, das bei Einsatz der Begrenzer 13, 18 in Figur 1 entsteht. Die fünf kleinen Signalsprünge erfahren etwa dieselbe Versteilerung wie in Figur 3, weil bei diesen Amplitudensprüngen die Begrenzer 13, 18 unwirksam bleiben. Die unerwünschten grossen Spannungsspitzen 33 gemäss Figur 3 sind jedoch durch die Begrenzer 13, 18 stark reduziert.

Die kombinierte Anwendung von Germanium- und Siliziumdioden beruht auf folgender Erkenntnis. Die Germaniumdiode ist im durchgeschalteten Zustand niederohmiger als eine Siliziumdiode, hat aber einen dynamischen Innenwiderstand im Durchlassbereich, der bei grossen Strömen in unerwünschter Weise grösser wird. Die Siliziumdiode ist zwar nicht so niederohmig wie eine Germaniumdiode, behält aber auch bei grossen Signalströmen annähernd einen konstanten dynamischen Innenwiderstand innerhalb des Durchlassbereiches. Bei der Erfindung werden nun die Vorteile der beiden verschiedenen Diodenarten in vorteilhafter Weise kombiniert. Durch diese Kombination ergibt sich insgesamt ein besonders kleiner Innenwiderstand im durchgeschalteten Bereich, der sowohl bei kleinen als auch bei grösseren Signalströmen wirksam ist. Durch diese Massnahme wird die Schaltereigenschaft der Dioden bei dem durch die Flussspannung gegebenen Schwellwert und damit die Wirkung des Begrenzers deutlich verbessert.

In der Praxis hat sich gezeigt, dass Dioden mit den gewünschten Eigenschaften nicht immer mit ausreichender Stückzahl verfügbar sind. Es ist dann notwendig, für eine einwandfreie Funktion der Schaltung Dioden mit bestimmten Eigenschaften aus einer grossen Menge herauszusuchen. Eine derartige Lösung ist jedoch für die Serienfertigung ungeeignet. Wenn die Dioden nicht die gewünschten Eigenschaften haben, ist das angestrebte Schaltverhalten der Dioden zur Amplitudenbegrenzung nicht optimal.

Gemäss einer Weiterbildung der Erfindung wird daher die notwendige Begrenzung ohne Dioden realisiert, indem die Dioden durch die Kollektor-Emitter-Strecken von zwei gegensinnig gepolten Transistoren gleichen Typs gebildet sind, deren Kollektor jeweils mit der Basis verbunden ist.

Durch die Anwendung von Transistoren als Dioden für die Begrenzung steht eine erhöhte Vielfalt von Halbleiterbauteilen zur Verfügung. Die Transistoren können in an sich bekannter Weise so geschaltet werden, dass sie die Aufgabe einer Diode erfüllen. Dabei besteht noch der Vorteil, dass ein als Diode geschalteter Transistor im Durchlassbereich niederohmiger ist als eine Diode. Durch eine besondere Schaltung des Transistors gemäss einer Weiterbildung der Erfindung kann der Durchlasswiderstand des als Diode arbeitenden Transistors beeinflusst, z.B. absichtlich vergrössert werden. Das kann zweckmässig sein, um die gesamte Schaltung nicht durch einen zu niederohmig gesteuerten Transistor unerwünscht stark zu belasten und zu dämpfen.

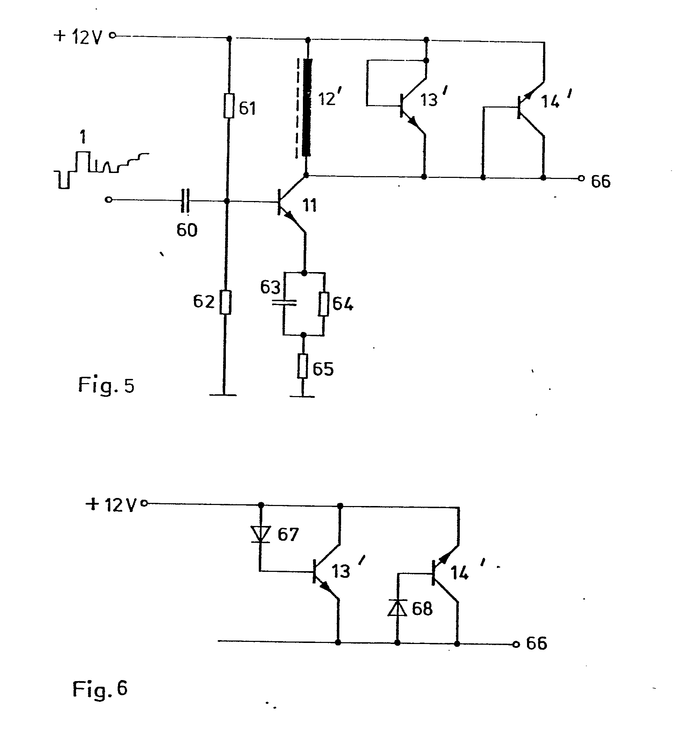

Ein Ausführungsbeispiel für diese Weiterbildung wird anhand der Figuren 5 und 6 erläutert.

In Figur 5 wird das Videosignal 1 über den Kondensator 60 dem Transistor 11 zugeführt, dessen Basis-Vorspannung durch den Spannungsteiler 61, 62 bestimmt ist. Der Emitter des Transistors 11 ist über das RC-Glied mit dem Kondensator 63 und dem Widerstand 64 sowie über den Widerstand 65 geerdet. An der Klemme 66 steht das einmal differenzierte Korrektursignal, das gemäss Figur 1 einer weiteren Differenzierstufe zugeführt wird. Die Differentiation erfolgt mit der Induktivität 12' im Kollektorkreis des Transistors 11. Parallel zur Induktivität 12' sind die beiden Siliziumtransistoren 13', 14' antiparallel geschaltet, wobei jeweils der Kollektor mit der Basis verbunden ist. Die Transistoren 13', 14' wirken in dieser Schaltung wie zwei antiparallel geschaltete Dioden. Ihr Durchlasswiderstand ist jedoch in erwünschter Weise wesentlich geringer. Bei bestimmten Bemessungen der gesamten Schaltung zur Verarbeitung des Videosignals kann durch die Schaltung nach Figur 1 der Durchlasswiderstand der Transistoren 13, 14 unerwünscht niedrig werden und den Verstärker mit dem Transistor 11 unerwünscht stark bedämpfen.

In der Schaltung gemäss Figur 6 ist der Durchlasswiderstand der Transistoren 13', 14' dadurch absichtlich erhöht, dass jeweils der Kollektor mit der Basis über eine Diode 67, 68 verbunden ist. Durch die Dioden 67, 68 wird das Schalterverhalten der Transistoren 13', 14' weicher und der Durchlasswiderstand in erwünschter Weise erhöht. Dadurch kann eine geringere Belastung und Bedämpfung des Verstärkers mit dem Transistor 11 erreicht werden. Bei Siliziumtransistoren 13', 14' werden vorzugsweise Germaniumdioden 67, 68 verwendet, weil sie einen kleineren Durchlasswiderstand bei kleinen Signalamptituden haben als Siliziumdioden. Bei grossen Signalamplituden wächst der dynamische Innenwiderstand der Germaniumdioden, während er bei Siliziumdioden annähernd konstant bleibt. Die Paarung aus den Germaniumdioden 67, 68 und den Siliziumtransistoren 13', 14' zur Erhaltung eines schalterähnlichen Begrenzers mit definiertem Innenwiderstand ist daher vorteilhaft.

Bei einem praktisch erprobten Ausführungsbeispiel hatten die Bauteile folgende Werte.

Transistor 11: Typ 2 N 2218
TR 13, 14: Typ BC237B
R61: 10 KOhm
R62: 10 KOhm
C63: 50 µF
R64: 100 Ohm
R65: 10 Ohm
Dioden 67, 68: AA143.

In einem Videorecorder erfolgt bekanntlich die Aufzeichnung des Videosignals in Form eines mit dem Videosignal frequenzmodulierten Trägers. Die gesamte Übertragungskennlinie hat, bedingt durch den Frequenzgang des Aufzeichnungskopfes und des Magnetbandes, einen Abfall zu hohen Frequenzen hin. Gerade Signalanteile hoher Frequenz haben statistisch gesehen jedoch eine relativ kleine Amplitude. Zur Verbesserung der Wiedergabe bei feinen Bilddetails ist es daher bekannt, das Videosignal vor dem FM-Modulator über eine sogenannte Preemphasis zu führen, in der die hohen Frequenzen angehoben werden. Bei der Wiedergabe erfolgt in einer Deemphasis-Schaltung wieder eine entsprechende Absenkung der hohen Frequenzen. Dadurch wird für diese hohen Frequenzanteile auch der Störabstand verbessert. Wenn die Schaltung nach Fig. 1 in einem Videorecorder bei der Aufnahme vor der Preemphasisschaltung eingesetzt wird, liegen im Weg des Videosignals zwei Schaltungen, die etwa die gleiche Wirkung haben, nämlich eine Anhebung hoher Frequenzanteile. Durch das Zusammenwirken dieser beiden Schaltungen kann es bei Signalsprüngen zu unerwünscht hohen Amplituden des Videosignals kommen. Da die Maximalamplitude des Videosignals durch die Betriebsspannung begrenzt ist, kann dadurch eine Verfälschung des Verlaufs des Videosignals eintreten. Die Qualität des wiedergegebenen Bildes wird dadurch beeinträchtigt. Andererseits ist jedoch die genannte Preemphasis-Schaltung wegen der angewendeten Frequenzmodulation nicht entbehrlich.

Bei einer Weiterbildung der Erfindung wird mit einfachen Schaltungsmitteln die durch die Preemphasis hervorgerufene Signalverfälschung vermieden. Das wird dadurch erreicht, dass ein im Aufnahmeweg des Recorders vor einem Frequenzmodulator liegender, zur Preemphasis des Videosignals dienender Verstärker mit einem Gegenkopplungsnetzwerk mit zu hohen Frequenzen hin zunehmender Gegenkopplung versehen ist.

Diese Lösung beruht auf folgender Erkenntnis. Die bekannte Preemphasis-Schaltung hat eine Verstärkung, die mit steigender Frequenz ständig zunimmt. Das ist zwar für ein nicht gemäss Fig. 1 aufbereitetes Videosignal im Sinne einer einwandfreien Signalübertragung vorteilhaft. Wenn jedoch das Videosignal bereits gemäss Fig. 1 aufbereitet ist, ist die bei der Preemphasis-Schaltung wirksame, zu hohen Frequenzen hin zunehmende Verstärkung nachteilig, weil dann die hohe Frequenzen enthaltenden Signalsprünge zu stark überbetont werden. Dieser Nachteil wird dadurch beseitigt, dass die Preemphasis-Schaltung eine definierte, zu hohen Frequenzen hin zunehmende Gegenkopplung aufweist. Diese wirkt der in der Preemphasis-Schaltung an sich vorhandenen Verstärkungserhöhung zu hohen Frequenzen hin in vorteilhafter Weise entgegen. Die Preemphasis-Schaltung hat also zwei unabhängig voneinander wirkende frequenzabhängige Netzwerke. Das eine dient unverändert im Sinne der Preemphasis zur Erhöhung der Verstärkung zu hohen Frequenzen hin. Das andere dient zu einer definierten Verringerung der Verstärkung in einem bestimmten Frequenzbereich.

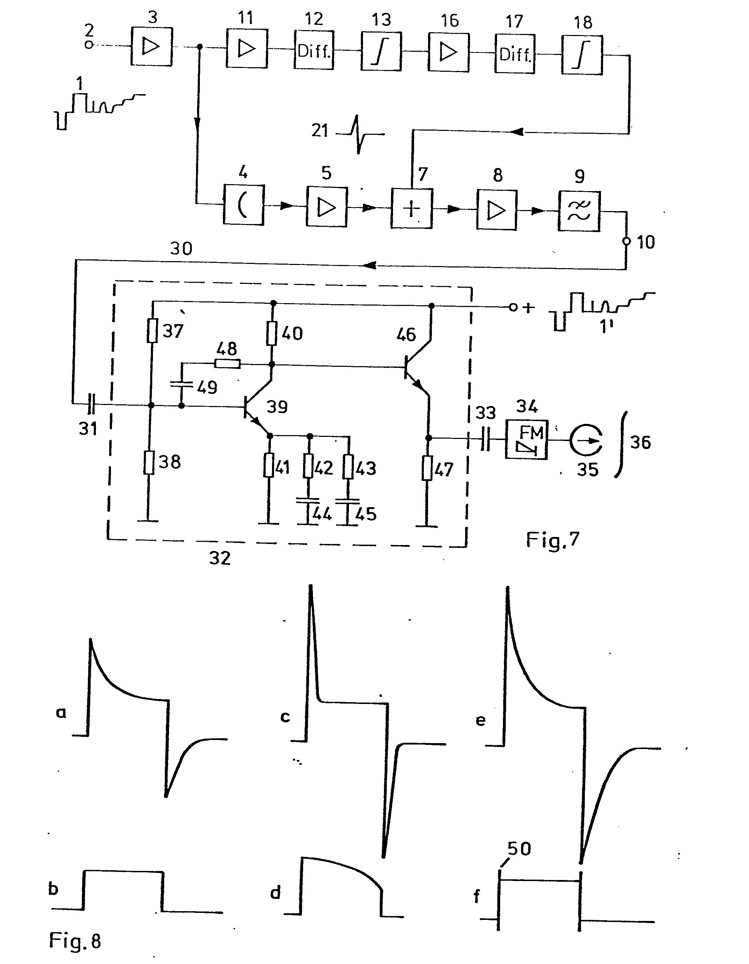

Ein Ausführungsbeispiel für diese Lösung wird anhand der Figuren 7 und 8 beschrieben.

Figur 7 zeigt entsprechend Figur 1 das Videosignal 1 an der Klemme 2, den Verstärker 3, das Laufzeitglied 4, den Verstärker 5, die Addierstufe 7, den Verstärker 8, den Tiefpass 9 und die Klemme 10, an der das gemäss der Erfindung im Sinne einer Erhöhung der Bildschärfe aufbereitete Videosignal 1' steht. In der Addierstufe 7 wird dem Videosignal das Korrektursignal 21 hinzugefügt. Dieses wird in dem Weg mit dem Verstärker 11, der Differenzierstufe 12, dem Amplitudenbegrenzer 13, dem zweiten Verstärker 16, der zweiten Differenzierstufe 17 und dem zweiten Amplitudenbegrenzer 18 aus dem Videosignal 1 gewonnen.

Das Videosignal 1' wird über die Leitung 30 und den Kondensator 31 der Preemphasis-Schaltung 32 zugeführt. Diese liefert an ihrem Ausgang das Videosignal über den Kondensator 33 an den FM-Modulator 34. Dieser erzeugt einen mit dem Videosignal frequenzmodulierten Träger, der mit dem Kopf 35 auf dem Magnetband 36 aufgezeichnet wird. Die Schaltung 32 enthält in bekannter Weise die zur Erzeugung der Basis-Vorspannung dienenden Widerständen 37, 38, den Transistor 39 mit dem Kollektor-Arbeitswiderstand 40, dem Emitterwiderstand 41 und dem frequenzabhängigen Gegenkopplungs-Netzwerk mit den Widerständen 42, 43 und den Kondensatoren 44, 45. Das Signal vom Ausgang des Transistors 39 gelangt über die Emitter-Folgerstufe mit dem Transistor 46 und dem Arbeitswiderstand 47 an den Ausgang der Schaltung 32. Das Netzwerk 42–45 bewirkt eine zu hohen Frequenzen hin abnehmende Gegenkopplung und damit ansteigende Verstärkung des Videosignals 1' für die Preemphasis.

Die Schaltung 32 enthält zusätzlich das Gegenkopplungs-Netzwerk mit dem Widerstand 48 und dem Kondensator 49. Dieses Netzwerk bewirkt eine zu hohen Frequenzen hin zunehmende Gegenkopplung und damit eine abnehmende Verstärkung des Transistors 39. Die Zeitkonstante des Netzwerkes 48, 49 liegt in der Grössenanordnung von 200 ns, was einer Grenzfrequenz von etwa 0,9 MHz entspricht.

Figur 8a zeigt die Impulsform eines Rechteckimpulses, der durch eine bekannte Preemphasis-Schaltung, also ohne das Netzwerk 48, 49 und ohne Aufbereitung des Videosignals gemäss Figur 1 aus einem Eingangsimpuls gemäss Figur 2b entsteht. Dieser Impuls hat die für die Aufzeichnung mit Frequenzmodulation notwendige Form. Bei Kombination der bekannten Preemphasis-Schaltung mit der Schaltung 2–18 in Figur 7 würde am Ausgang der Preemphasis-Schaltung ein Impuls gemäss Figur 8c entstehen. Die dargestellten Spannungsspitzen sind durch die Wirkung der Anhebung bei hohen Frequenzen an sich höher als dargestellt. Sie werden durch die Betriebsspannung in der Amplitude begrenzt. Durch diese Begrenzung tritt unabhängig von der Amplitudenänderung die unerwünschte Kurvenverformung von Figur 8a nach Figur 8c ein. Bei der Aufzeichnung dieses Signals würde sich bei der Wiedergabe ein verfälschter Impuls gemäss Figur 8d ergeben.

Durch die Anwendung des Netzwerkes 48, 49 in der Schaltung 32 wird am Ausgang der Schaltung 32 ein Impuls gemäss Figur 8e erzeugt. Dieser Impuls hat etwa die gleiche Amplitude wie der Impuls gemäss Figur 8c, jedoch wieder die richtige Kurvenform gemäss Figur 8a. Bei der Aufzeichnung und anschliessenden Demodulation und Deemphasis entsteht daraus ein Impuls gemäss Figur 8f. Dieser hat wieder die gewünschte Kurvenform ähnlich wie in Figur 8b, jedoch durch die Anwendung der Schaltung 2–18 gemäss Figur 1 eine gewünschte Überbetonung der Sprünge, wie durch die Überschwinger 50 dargestellt ist. Diese Überbetonung bewirkt bei der Bildwiedergabe eine Bildverbesserung in Form einer schärferen Darstellung feiner Bilddetails bei hohen Frequenzen.

Die Schaltung 32 wird von der Klemme 10 an ihrem Eingang mit einem aufbereiteten Videosignal 1' mit einer Spitze-Spitze-Amplitude von etwa 1 V gespeist.

In Figur 7 erfolgen die Preemphasis und die zur Verringerung der hochfrequenten Impulsspitzen eingeführte frequenzabhängige Gegenkopplung in derselben Verstärkerstufe mit dem Transistor 39. Das ist nicht unbedingt notwendig. Die Preemphasis und die genannte Gegenkopplung können auch in getrennten, im Signalweg aufeinanderfolgenden Stufen liegen.

Bei einem praktisch erprobten Ausführungsbeispiel hatten die Bauteile in der Schaltung 32 die folgenden Werte.

| | |
|---|---|
| C31: | 47 µF |
| C33: | 47 µF |
| R37: | 15 KOhm |
| R38: | 10 KOhm |
| Tr39: | Typ BC 237B |
| R40: | 1 KOhm |
| R41: | 1 KOhm |
| R42: | 470 Ohm |
| R43: | 1 KOhm |
| C44: | 680 pF |
| C45: | 1,2 nF |
| Tr46: | BC 237B |
| R47: | 1 KOhm |
| R48: | 2,2 KOhm |
| C49: | 82 pF |

Bei Anwendung der Erfindung in einem Fernsehempfänger kann folgende Störung auftreten. Wenn der Empfänger nicht optimal abgestimmt ist, kann bei Anwendung der Schaltung das wiedergegebene Bild durch eine Bildplastik und Rauschen beeinträchtigt werden. Unter bestimmten Bedingungen kann dann die Bildwiedergabe subjektiv schlechter sein als ohne Anwendung der Schaltung nach der Erfindung.

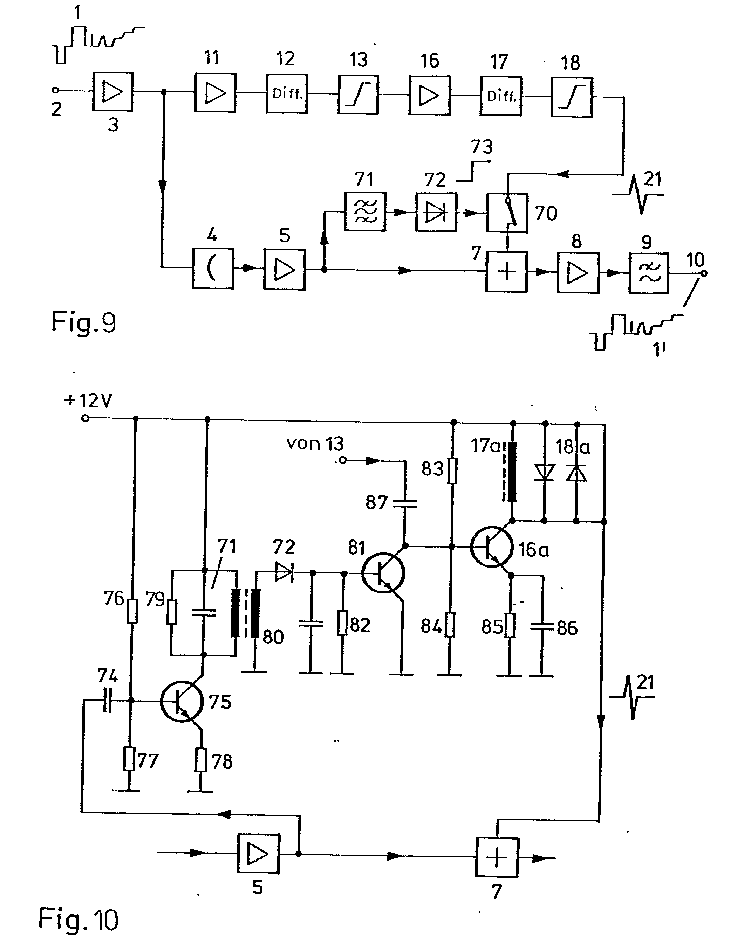

Figuren 9 und 10 zeigen eine Weiterbildung der Erfindung, durch die bei nicht optimaler Abstimmung auftretende Störungen dadurch vermieden werden, dass die Amplitude des Korrektursignals mit steigender Amplitude der Signalanteile im oberen Frequenzbereich des nichtkorrigierten Videosignals verringert wird.

Diese Lösung beruht auf folgender Erkenntnis. Die nach subjektiven Empfinden vorgenommene nicht optimale Abstimmung erfolgt meist in dem Sinne, dass die hohen Frequenzanteile im Videosignal angehoben werden, was oft subjektiv als schärferes Bild empfunden und allgemein als «Anspitzung» bezeichnet wird. Die Schaltung nach Fig. 1 wirkt nun ebenfalls in dem Sinne, dass hohe Frequenzanteile angehoben werden. Durch die gleichzeitige Fehlabstimmung im Sinne einer Anspitzung und die Wirkung der Schaltung nach Fig. 1 kommt es dann insgesamt zu einer zu starken Anhebung der hohen Frequenzanteile, wodurch sich die Bildplastik und das Rauschen erklären lassen. Die nicht optimale Abstimmung durch frequenzselektive Auswertung des Videosignals automatisch ermittelt und in Abhängigkeit davon selbsttätig die Wirkung der Schaltung nach Fig. 1 verringert. Hierzu kann die Korrekturspannung kontinuierlich bei steigender Amplitude der Signalanteile hoher Frequenz im Videosignal verringert werden. Eine andere Ausführung besteht darin, das Korrektursignal vollständig abzuschalten, wenn die Signalanteile höherer Frequenz im Videosignal einen bestimmten Schwellwert überschreiten. Bei einer Fehlabstimmung ist dann zwar die Schaltung nach der Fig. 1 wirkungslos und trägt somit zur Bildverbesserung nicht bei. Es wird jedoch verhindert, dass für die Fälle einer Fehlabstimmung die Schaltung nach Fig. 1 in unerwünschter Weise die Bildqualität beeinträchtigt.

In Figur 9 gelangt das Videosignal 1 von der Klemme 2 über den Verstärker 3, das Laufzeitglied 4, den Verstärker 5, die Addierstufe 7, den Verstärker 8 und den Tiefpass 9 an die Klemme 10, an der das gemäss Fig. 1 im Sinne einer Erhöhung der Bildschärfe aufbereitete Videosignal 1' steht. In der Addierstufe 7 wird dem Videosignal das Korrektursignal 21 hinzugefügt. Dieses wird in dem Weg mit dem Verstärker 11, der Differenzierstufe 12, dem Amplitudenbegrenzer 13, dem zweiten Verstärker 16, der zweiten Differenzierstufe 17 und dem zweiten Amplitudenbegrenzer 18 aus dem Videosignal 1 gewonnen. Die dargestellte Schaltung ist mit ihren Klemmen 2, 10 in den Leuchtdichtesignalweg eines Farbfernsehempfängers eingebaut.

In den Weg der Korrekturspannung 21 vom Ausgang des Begrenzers 18 zum Eingang der Addierstufe 7 ist zusätzlich das Tor 70 eingefügt, das bei optimal abgestimmtem Fernsehempfänger durchlässig ist.

Das Videosignal vom Ausgang des Verstärkers 5 gelangt zu dem Filter 71, das einen Durchlassbereich bei etwa 2–3 MHz aufweist. Bei einer Fehlabstimmung des Empfängers sind die Signalanteile in diesem Frequenzbereich stark angehoben, so dass am Ausgang des Filters 71 eine überhöhte Spannung auftritt. Diese Spannung wird in dem Gleichrichter 72 gleichgerichtet. Wenn die gleichgerichtete Spannung einen bestimmten Schwellwert übersteigt, entsteht in einer nicht näher dargestellten Schwellwertschaltung die Schaltspannung 73. Diese Schaltspannung steuert das Tor 70 undurchlässig, so dass die Korrekturspannung 21 nicht mehr zur Addierstufe 7 gelangt. Die Korrekturschaltung 11–13, 16–18 ist dann in erwünschter Weise wirkungslos. Wenn der Empfänger wieder richtig abgestimmt ist, sinkt die Amplitude der Signalanteile im oberen Frequenzbereich des Videosignals am Ausgang des Verstärkers 5 wieder ab. Die Schaltspannung 73 verschwindet dann, und das Tor 70 wird wieder durchlässig gesteuert. Die Korrekturspannung 21 gelangt dann wieder in erwünschter Weise auf die Addierstufe 7.

In Figur 10 gelangt das Videosignal vom Ausgang des Verstärkers 5 über den Kondensator 74 auf die Basis des Transistors 75, dessen Basisvorspannung mit dem Spannungsteiler 76, 77 erzeugt wird und dessen Emitter über den Widerstand 78 geerdet ist. Im Kollektorkreis des Transistors 75 liegt das auf 2–3 MHz abgestimmte Filter 71, das mit dem Widerstand 79 bedämpft ist. Durch die mit der Induktivität des Filters 71 gekoppelte Spule 80 werden die Signalanteile im Frequenzbereich von 2–3 MHz ausgekoppelt und über den Gleichrichter 72 der Basis des Transistors 81 zugeführt. Die Basis ist über den Widerstand 82 geerdet. Der Kollektor ist an die Basis des Transistors 16a angeschlossen, der den Verstärker 16 in Figur 1 darstellt. Die Basisvorspannung für den Transistor 16a wird mit den Widerständen 83, 84 erzeugt. Der Emitter des Transistors 16a ist über den Widerstand 85 und den Kondensator 86 geerdet. Die Differenzierstufe ist durch die Induktivität 17a gebildet und der Amplitudenbegrenzer 18 durch zwei antiparallel geschaltete Dioden 18a. Das Videosignal gelangt von dem Begrenzer 13 über den Kondensator 87 auf die Basis des Transistors 16a.

Bei optimal abgestimmtem Fernsehempfänger sind die am Filter 71 entstehenden Signalanteile und die daraus gewonnene Gleichspannung an der Basis des Transistors 81 so gering, dass der Transistor 81 gesperrt bleibt und auf die Funktion des Transistors 16a keinen Einfluss hat. Die Korrekturspannung 21 gelangt dann zwecks Schärfeerhöhung auf den Eingang der Addierstufe 7.

Bei nicht optimaler Abstimmung wird die Gleichspannung an der Basis des Transistors 81 so gross, dass der Transistor 81 leitet und die Basis des Transistors 16a erdet. Dadurch verschwindet die Korrekturspannung 21 am Eingang der Addierstufe 7. Der Transistor 81 wirkt also als Amplitudenschwellwert-Schaltung und der Transistor 16a als Tor 70 in Figur 9.

Der Tiefpass 9 hat vorzugsweise in einem Farbfernsehempfänger die Grenzfrequenz von 3,5 MHz. Ein Tiefpass mit der gleichen Grenzfrequenz ist vorzugsweise in Reihe zum Verstärker 3 vorgesehen.

Bei einem praktisch erprobten Ausführungsbeispiel hatten die Bauteile in Figur 10 die folgenden Werte:

| Gleichrichter 72: | Diode AA 143 |
|---|---|
| Tr 75 R 76: | Typ 22 kOhm |
| R77: | 10 kOhm |
| R78: | 47 Ohm |
| R79: | 2,2 kOhm |
| Tr81: | Typ BC 237B |
| R82: | 10 kOhm |
| R83: | 22 kOhm |
| R84: | 10 kOhm |
| R85: | 390 Ohm |
| C86: | 4,7µF |
| C87: | 10 nF |
| C74: | 10 nF |

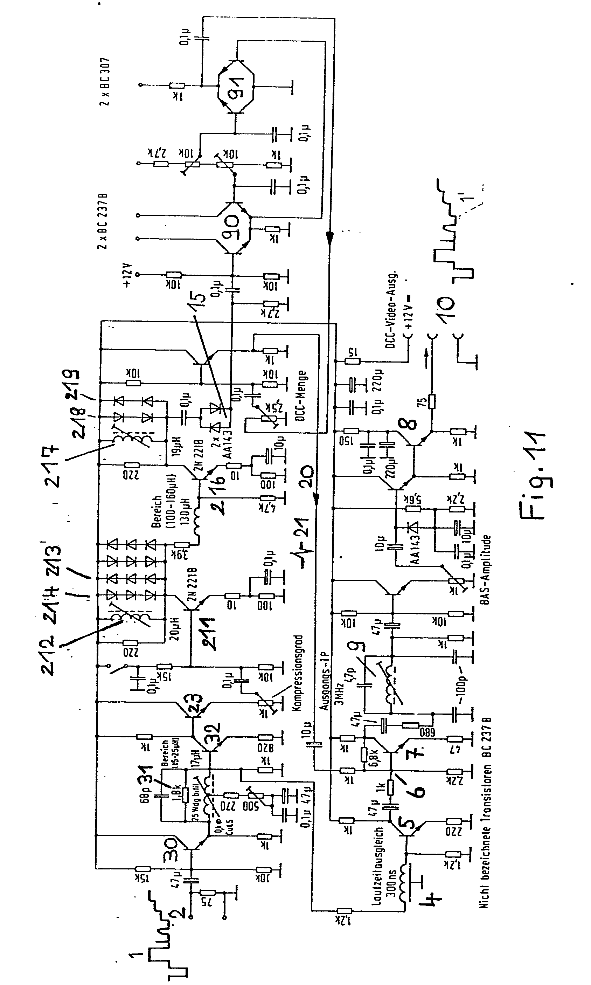

Fig. 11 zeigt eine praktisch erprobte Schaltung gemäss dem Blockschaltbild nach Fig. 1, wobei einander entsprechende Teile mit gleichen Bezugsziffern versehen sind. Im Weg des Videosignals 1 liegen der Transistor 30, der Tiefpass 31 mit einer Grenzfrequenz von 3,0 MHz, der Transistor 32 und der als Emitterfolger betriebene Transistor 23. Der Schaltungspunkt 6 an der Basis des Transistors 27 ist der Punkt, an dem das Videosignal und das Korrektursignal 21 addiert werden. Die Spule 212 im Kollektorkreis des Transistors 211 wirkt als Differenzierglied. Parallel zur Spule 212 liegen antiparallel geschaltete Siliziumdioden 213, 214.

Durch die Dioden 213, 214 tritt eine Begrenzerwirkung bei einer Spannung von etwa 0,2 Volt ein. Der Transistor 216 bildet die zweite Verstärkerstufe und die Spule 217 das zweite Differenzierglied. Die Dioden 218, 219 bewirken wieder die Amplitudenbegrenzung. Das Korrektursignal gelangt vom Kollektor des Transistors 216 auf die Schaltung 15, die nur Signale oberhalb eines bestimmten Schwellwertes durchlässt und dadurch Rauschen unterhalb dieses Schwellwertes unterdrückt. Das am Ausgang der Schaltung 15 stehende Korrektursignal gelangt dann auf die beiden Begrenzer 90, 91, die zusätzlich das Korrektursignal in positiver und negativer Richtung begrenzen, so dass das Korrektursignal 21 an dem Schaltungspunkt 6 die optimale maximale Amplitude relativ zum Videosignal 1 hat.

Bei einem praktisch erprobten Ausführungsbeispiel wurden für die in Figur 11 dargestellten Halbleiterbauteile follgende Typen verwendet.

Transistoren 11, 16: Typ 2N2218
alle anderen Transistoren: Typ BC 237B
Siliziumdioden: 13, 14, 18, 19: Typ BAY95
Germaniumdioden: 13', 14', 18', 19': Typ AAZ10.

## Patentansprüche

1. Schaltung zur Versteilerung der Flanken eines Videosignals (1), bei der aus dem Videosignal (1) durch zweifache Differentiation ein Korrektursignal (21) gewonnen und dem Videosignal (1) in einer Addierstufe (7) hinzugefügt wird, dadurch gekennzeichnet, dass im Korrektursignalweg nach jeder Differentiation (12, 17) eine so bemessene Amplitudenbegrenzung (13, 18) vorgesehen ist, die bei grossen Signalsprüngen des Videosignals (1) am Ausgang (10) der Addierstufe (7) im korrigierten Videosignal (1') störende Impulsspitzen (33) unterdrückt.

2. Schaltung nach Anspruch 1, dadurch gekennzeichnet, dass parallel zu einem das Korrektursignal (21) führenden Bauteil (212, 217) antiparallel geschaltete Dioden (213, 214, 218, 219) liegen (Fig. 11).

3. Schaltung nach Anspruch 2, dadurch gekennzeichnet, dass bei einer Differenzierstufe mit einer Induktivität (212, 217) die Dioden (213, 214, 218, 219) parallel zur Induktivität liegen (Fig. 11).

4. Schaltung nach Anspruch 1, dadurch gekennzeichnet, dass im Weg des korrigierten Videosignals (1') ein Tiefpass (9) mit einer der Bandbreite des Videosignals (1') entsprechenden Durchlassbandbreite liegt.

5. Schaltung nach Anspruch 1, dadurch gekennzeichnet, dass dem Bauteil (212, 217) zwei antiparallel geschaltete Silizium-Dioden und zwei antiparallel geschaltete Germanium-Dioden parallel geschaltet sind.

6. Schaltung nach Anspruch 2, dadurch gekennzeichnet, dass die Dioden durch die Kollektor-Emitter-Strecken von zwei gegensinnig gepolten Transistoren (13', 14') gleichen Typs (npn) gebildet sind, deren Kollektor jeweils mit der Basis verbunden ist (Fig. 5, 6).

7. Schaltung nach Anspruch 6, dadurch gekennzeichnet, dass jeweils der Kollektor mit der Basis über eine gleichsinnig mit der Basis-Emitter-Strecke gepolte Diode (67, 68) verbunden ist (Fig. 6).

8. Schaltung nach Anspruch 1, dadurch gekennzeichnet, dass bei Anwendung dieser Schaltung im Aufnahmeweg eines Videorecorders ein im Aufnahmeweg des Recorders vor einem Frequenzmodulator (34) liegender, zur Preemphasis des Videosignals (1') dienender Verstärker (32) mit einem Gegenkopplungs-Netzwerk (48, 49) mit zu hohen Frequenzen hin zunehmender Gegenkopplung versehen ist (Fig. 7, 8).

9. Schaltung nach Anspruch 8, dadurch gekennzeichnet, dass das Netzwerk durch eine RC-Reihenschaltung (48, 49) zwischen Kollektor und Basis eines im Verstärker (32) enthaltenden Transistors (39) gebildet ist (Fig. 7, 8).

10. Schaltung nach Anspruch 1, dadurch gekennzeichnet, dass die Amplitude des Korrektursignals (21) mit steigender Amplitude der Signalanteile im oberen Frequenzbereich des nicht korrigierten Videosignals (1) verringert wird (Fig. 9, 10).

## Revendications

1. Circuit pour réduire le temps de montée d'un signal vidéo (1), dans lequel à partir du signal vidéo (1) un signal de correction (21) est obtenu par une double différentiation et est ajouté au signal vidéo (1) dans un étage d'addition (7), caractérisé en ce qu'il est prévu dans la voie de transmission du signal de correction, après chaque différentiation (12, 17), une limitation d'amplitude (13, 18) qui est calibrée de telle sorte que, pour de grands sauts du signal vidéo (1) à la sortie (10) de l'étage d'addition (7), des crêtes d'impulsions (33) perturbant le signal vidéo corrigé (1') soient supprimées.

2. Circuit selon la revindication 1, caractérisé en ce que des diodes (213, 214, 218, 219) branchées en anti-parallèle sont connectées en parallèle à un composant (212, 217) transmettant le signal de correction (21) (figure 11).

3. Circuit selon la revindication 2, caractérisé en ce que, dans un étage de différentiation comportant une inductance (212, 217), les diodes (213, 214, 218, 219) sont branchées en parallèle à l'inductance (figure 11).

4. Circuit selon la revendication 1, caractérisé en ce qu'il est prévu dans la voie de transmission du signal vidéo corrigé (1') un filtre passe-bas (9) ayant une largeur de bande passante correspondant à la largeur de bande du signal vidéo (1').

5. Circuit selon la revendication 1, caractérisé en ce que deux diodes au silicium branchées en anti-parallèle et deux diodes au germanium branchées en anti-parallèle sont branchées en parallèle au composant (212, 217).

6. Circuit selon la revendication 2, caractérisé en ce que les diodes sont constituées par les voies collecteur-émetteur de deux transistors (13', 14') de même type (npn) polarisés en sens inverses et dont le collecteur respectif est relié à la base (figures 5, 6).

7. Circuit selon la revendication 6, caractérisé en ce que respectivement le collecteur est relié à la base par l'intermédiaire d'une diode (67, 68) polarisée dans le même sens que la voie base-émetteur (figure 6).

8. Circuit selon la revendication 1, caractérisé en ce que, lors de l'utilisation de ce circuit dans la voie d'enregistrement d'un magnétoscope, un amplificateur (32) placé dans la voie d'enregistrement du magnétoscope avant un modulateur de fréquence (34) et servant à la pré-accentuation du signal vidéo (1') est pourvu d'un réseau de contre-réaction (48, 49) exerçant une contre-réaction augmentation en direction des hautes fréquences (figures 7, 8).

9. Circuit selon la revendication 8, caractérisé en ce que le réseau est constitué par un circuit à résistance-condensateur en série (48, 49) qui est placé entre le collecteur et la base d'un transistor (39) intervenant dans l'amplificateur (32) (figures 7, 8).

10. Circuit selon la revendication 1, caractérisé en ce que l'amplitude du signal de correcion (21) est diminuée lors de l'augmentation de l'amplitude des parties, situées dans la plage des hautes fréquences, du signal vidéo non corrigé (1) (figures 9, 10).

**Claims**

1. Circuit for steepening the flanks of a video signal (1) in which a correcting signal (21) is derived from the video signal (1) by double differentiation and is added to the video signal (1) in an adding stage (7), characterized in that an amplitude limitation (13, 18) is provided in the correcting signal path after each differentiation (12, 17), which limitation is so determined that upon the occurrence of large signal jumps of the video signal it suppresses disturbing impulse spikes (33) in the corrected video signal (1') at the output (10) of the adding stage (7).

2. Circuit according to Claim 1, characterized in that diodes (213, 214, 218, 219) connected in anti-parallel arrangement are disposed in parallel to a component (212, 217) carrying the correcting signal (21) (Fig. 11).

3. Circuit according to Claim 2, characterized in that in the case of a differentiating stage having an inductance (212, 217), the diodes (213, 214, 218, 219) are disposed in parallel to the inductance (Fig. 11).

4. Circuit according to Claims 1, characterized in that a low pass filter (9) is disposed in the path of the corrected video signal (1'), having a pass band width corresponding to the band width of the video signals (1').

5. Circuit according to Claim 1, characterized in that two anti-parallel connected silicon diodes and two anti-parallel connected germanium diodes are connected in parallel with the component (212, 217).

6. Circuit according to Claim 2, characterized in that the diodes are composed of the collector-emitterpaths of two transistors (13', 14') of the same type (npn) poled in opposite senses, the collector of each of which is connected to the respective base (Fig. 5, 6).

7. Circuit according to Claim 6, characterized in that the collector is connected to the respective base by way of a diode (67, 68) poled in the same sense as the base emitter path (Fig. 6).

8. Circuit according to Claim 1, characterized in that in the case of the use of this circuit in the reception path of a video recorder, an amplifier (32) is provided in the reception path of the recorder, disposed in front of a frequency modulator (34) and serving to pre-emphasise the video signal (1'), the amplifier having a back-coupling network (48, 49) with back coupling increasing toward high frequency (Fig. 7, 8).

9. Circuit according to Claim 8, characterized in that the network is formed by an RC series circuit (48, 49) beween the collector and base of a transistor (39) included in the amplifier (32) (Fig. 7, 8).

10. Circuit according to Claim 1, characterized in that the amplitude of the correcting signal (21) is reduced with increasing amplitude of the signal components in the upper frequency range of the uncorrected video signal (1) (Fig. 9, 10).

1/5

Fig. 1

Fig.2

Fig.3

Fig.4

Fig. 5

Fig. 6

J/5

Fig.7

Fig.8

Fig.9

Fig.10

5/5

Fig. 11